# EUROPEAN PATENT APPLICATION

(11) **EP 4 776 703 A1**
(43) Date of publication of application: **15.07.2026**
(21) Application number: 26151203.2
(22) Date of filing: 11.01.2026
(51) Int. Cl.: H04W 52/02

(54) **SYSTEMS AND METHODS OF DATA COMMUNICATION USING WAKE-UP RADIO FRAMES**

(30) Priority: 10.01.2025 US 202563743982 P
(71) Applicant: Haila Technologies Inc., Montreal, QC H4C 2K1 (CA)
(72) Inventor: NISHAT, MUHAMMAD, Montreal (CA); KEZYS, VYTAS, Montreal (CA)
(74) Representative: AOMB Polska Sp. z.o.o.

(57) **Abstract**

Systems and methods of data communication are provided. The method includes transmitting a wake-up radio (WUR) data frame by an IEEE 802.11ba-based radio transmitter. The WUR data frame includes a frame header and a frame body. The frame body includes a data payload field for storing data to be communicated; and a data payload length field that indicates a bit-length of the data payload field.

## Description

### FIELD

The present subject-matter relates to systems and methods of data communication, and more particularly to systems and methods of data communication using wake-up radio frames.

### BACKGROUND

Wireless data communication includes transmitting and receiving data using radio frequency (RF) signals. A transmitter generates a data frame for transmission by assigning data to a block of modulation symbols. A symbol refers to any suitable representation of information. For example, in some applications, a symbol may correspond to a single bit. In some applications, a symbol may correspond to a sequence of chips. Any suitable modulation scheme may be used to assign the data to the modulation symbols. For example, the modulation scheme may include on-off keying (OOK), phase shift keying (PSK) or frequency shift keying (FSK).

Wake-up Radio (WUR) operation enables an energy-efficient wireless data reception mode for devices. A low-power WUR receiver monitors the RF spectrum for one or more WUR frames. In response to receiving wake-up instructions, the device can switch from the low-power WUR receiver to a higher-power primary connectivity radio (PCR) for further communication. For example, WUR operation defined in the IEEE 802.11ba standard enables low-power communication with WUR active power consumption of less than 1mW. However, the WUR operation can have overheads related to maintaining association between the device and the network infrastructure. For example, the WUR operation can have overheads related to using beacon frames for synchronization between an access point (AP) and non-AP stations.

### SUMMARY OF THE VARIOUS EMBODIMENTS

The following introduction is provided to introduce the reader to the more detailed discussion to follow. The introduction is not intended to limit or define any claimed or as yet unclaimed invention. One or more inventions may reside in any combination or sub-combination of the elements or process steps disclosed in any part of this document including its claims and figures.

In one broad aspect, there is provided a method of data communication. The method includes transmitting a wake-up radio (WUR) data frame by an IEEE 802.11ba-based radio transmitter. The WUR data frame includes a frame header and a frame body. The frame body includes a data payload field for storing data to be communicated; and a data payload length field that indicates a bit-length of the data payload field.

The frame header may include an 8-bit frame control field, the 8-bit frame control field including a 3-bit type field storing a type identifier value that indicates a WUR frame type of the WUR data frame as a "data" frame type.

The WUR data frame may be compliant with an IEEE 802.11ba standard.

The frame header may be a 32-bit MAC header that includes the 8-bit frame control field and a 24-bit multicast address data field, the 24-bit multicast address data field formed by a combination of a 12-bit ID field and a 12-bit Type Dependent Control field.

The multicast address data field may include an IEEE 802.11bc Enhanced Broadcast Services (EBCS) traffic stream identifier.

The 8-bit frame control field may further include a 3-bit Length/Miscellaneous field to store bits indicating data fragmentation.

The method may further include receiving and decoding the data frame by one or more devices, each of the one or more devices including an IEEE 802.11ba-based radio receiver.

The one or more devices may include an ambient power device compliant with an IEEE 802.11bp standard.

The one or more devices may include a backscattering tag.

The WUR data frame may be transmitted by the IEEE 802.11ba-based radio transmitter of a non-Access Point (AP) station (STA).

In another broad aspect, there is provided a system of data communication. The system includes a first device and a second device. The first device includes an IEEE 802.11ba-based radio transmitter for transmitting a wake-up radio (WUR) data frame. The WUR data frame includes a frame header and a frame body. The frame body includes a data payload field for storing data to be communicated; and a data payload length field that indicates a bit-length of the data payload field. The second device includes a WUR receiver for receiving the WUR data frame including the data stored in the data payload field.

The frame header may include an 8-bit frame control field, the 8-bit frame control field including a 3-bit type field storing a type identifier value that indicates a WUR frame type of the WUR data frame as a "data" frame type.

The WUR data frame may be compliant with an IEEE 802.11ba standard.

The frame header may be a 32-bit MAC header that includes the 8-bit frame control field and a 24-bit multicast address data field, the 24-bit multicast address data field formed by a combination of a 12-bit ID field and a 12-bit Type Dependent Control field.

The multicast address data field may include an IEEE 802.11bc Enhanced Broadcast Services (EBCS) traffic stream identifier.

The 8-bit frame control field may further include a 3-bit Length/Miscellaneous field to store bits indicating data fragmentation.

The WUR receiver may be an IEEE 802.11ba-based radio receiver.

The second device may be an ambient power device compliant with an IEEE 802.11bp standard.

The second device may be a backscattering tag.

The first device may be a non-Access Point (AP) station (STA).

Other features and advantages of the present application will become apparent from the following detailed description. It should be understood, however, that the detailed description and the specific examples, while indicating embodiments of the application, are given by way of illustration only and the scope of the claims should not be limited by these embodiments, but should be given the broadest interpretation consistent with the description as a whole.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment, and in which:
FIG. 1A is a schematic diagram of a data communication system, in accordance with an example embodiment;
FIG. 1B is a schematic diagram of a data communication system, in accordance with another example embodiment;
FIG. 2 is a process flow for an example embodiment of a method of data communication using WUR data frames;
FIG. 3 is a block diagram of an example WUR data frame that is transmitted during the execution of the method of FIG. 2;
FIG. 4A is a block diagram of an example frame header of the WUR data frame of FIG. 3;
FIG. 4B is a block diagram of an example frame control field of the frame header of FIG. 4A;
FIG. 5A is a block diagram of an example frame body of the WUR data frame of FIG. 3; and
FIG. 5B is a block diagram of another example frame body of the WUR data frame of FIG. 3.

Further aspects and features of the example embodiments described herein will appear from the following description taken together with the accompanying drawings.

### DESCRIPTION OF VARIOUS EMBODIMENTS

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the example embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

The terms "an embodiment," "embodiment," "embodiments," "the embodiment," "the embodiments," "one or more embodiments," "some embodiments," and "one embodiment" mean "one or more (but not all) embodiments of the present invention(s)," unless expressly specified otherwise.

The terms "including," "comprising" and variations thereof mean "including but not limited to," unless expressly specified otherwise. A listing of items does not imply that any or all of the items are mutually exclusive, unless expressly specified otherwise. The terms "a," "an" and "the" mean "one or more," unless expressly specified otherwise.

As used herein and in the claims, two or more parts are said to be "coupled", "connected", "attached", or "fastened" where the parts are joined or operate together either directly or indirectly (i.e., through one or more intermediate parts), so long as a link occurs. As used herein and in the claims, two or more parts are said to be "directly coupled", "directly connected", "directly attached", or "directly fastened" where the parts are connected in physical contact with each other. As used herein, two or more parts are said to be "rigidly coupled", "rigidly connected", "rigidly attached", or "rigidly fastened" where the parts are coupled so as to move as one while maintaining a constant orientation relative to each other. None of the terms "coupled", "connected", "attached", and "fastened" distinguish the manner in which two or more parts are joined together.

It should be noted that terms of degree such as "substantially", "about" and "approximately" when used herein mean a reasonable amount of deviation of the modified term such that the end result is not significantly changed. These terms of degree should be construed as including a deviation of the modified term if this deviation would not negate the meaning of the term it modifies.

In addition, as used herein, the wording "and/or" is intended to represent an inclusive-or. That is, "X and/or Y" is intended to mean X or Y or both, for example. As a further example, "X, Y, and/or Z" is intended to mean X or Y or Z or any combination thereof.

Further, although method steps may be described (in the disclosure and / or in the claims) in a sequential order, such methods may be configured to work in alternate orders. In other words, any sequence or order of steps that may be described does not necessarily indicate a requirement that the steps be performed in that order. The steps of methods described herein may be performed in any order that is practical. Further, some steps may be performed simultaneously.

As used herein and in the claims, a group of elements are said to "collectively" perform an act where that act is performed by any one of the elements in the group, or performed cooperatively by two or more (or all) elements in the group.

Some elements herein may be identified by a part number, which is composed of a base number followed by an alphabetical or subscript-numerical suffix (e.g. 112a, or 112₁). Multiple elements herein may be identified by part numbers that share a base number in common and that differ by their suffixes (e.g. 112₁, 112₂, and 112₃). All elements with a common base number may be referred to collectively or generically using the base number without a suffix (e.g. 112).

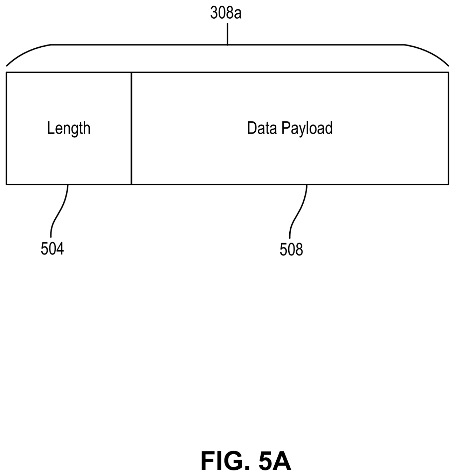

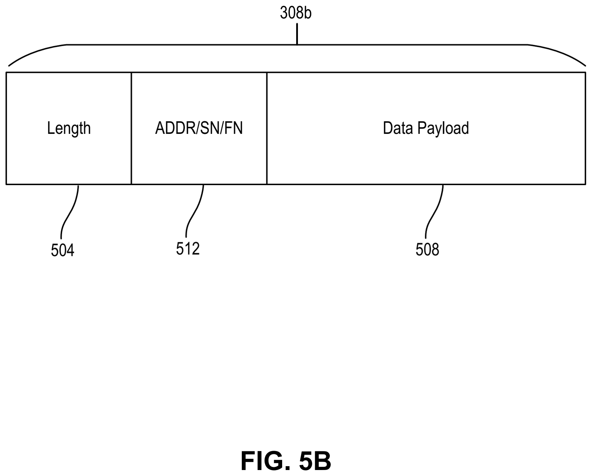

The IEEE 802.11ba standard provides WUR frames that are control frames or management frames. Additionally, the WUR frames are transmitted by an Access Point (AP) to non-AP Stations (STAs). The disclosed systems and methods can leverage power-efficient WUR operation for data communication using WUR frames. The disclosed WUR data frames may be transmitted by an AP (e.g., as described with reference to FIG. 5A) or by a non-AP STA (e.g., as described with reference to FIG. 5B). Further, the disclosed systems and methods can provide improved power efficiency by mitigating WUR operation overheads related to maintaining association. The disclosed WUR frames have a frame header that includes a multicast address data field. Multicast addressing can enable the disclosed systems and methods to provide data communication while avoiding requirement for devices to maintain association with network infrastructure.

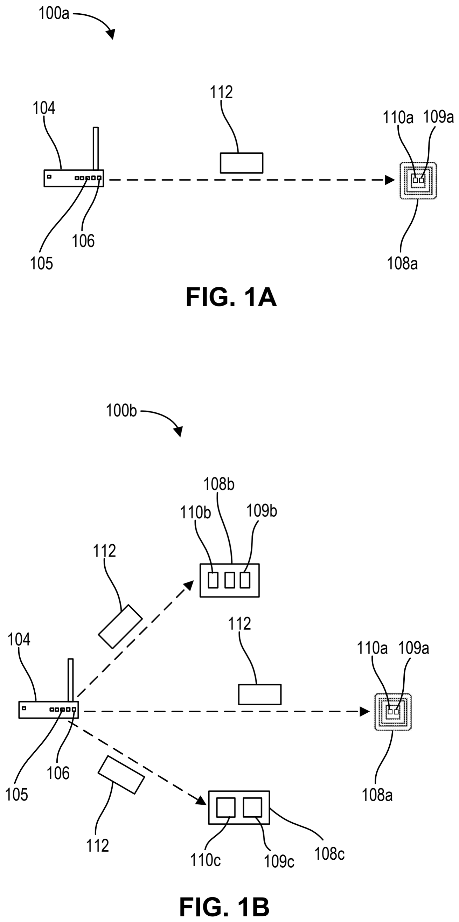

Reference is now made to FIG. 1A, which is a schematic diagram of a data communication system 100a, in accordance with an example embodiment. System 100a includes a network infrastructure device 104 and a network device 108a.

Network infrastructure device 104 may be any suitable infrastructure device. For example, network infrastructure device 104 may be an access point (AP). Network infrastructure device 104 may enable WUR operation by transmitting WUR frames 112. Network infrastructure device 104 may include a WUR transmitter 105 configured to transmit WUR frames 112. Network infrastructure device 104 may include a WUR receiver 106 configured to receive WUR frames 112.

In some embodiments, the transmitted WUR frames 112 may be compliant with an IEEE 802.11ba standard. For example, WUR transmitter 105 may be an IEEE 802.11ba-based radio transmitter and WUR receiver 106 may be an IEEE 802.11ba-based radio receiver. In other embodiments, the transmitted WUR frames 112 may be based on a different standard.

Network device 108a may be any suitable device that includes a WUR receiver 110a that enables WUR operation. In some embodiments, the WUR receiver 110a may be based on a low-complexity, low-power envelope detector. The envelope detector can enable ultra-low-power or ambient power operation for network device 108a. For example, the WUR frame 112 may utilize OOK modulation that can be demodulated by the envelope detector of the WUR receiver 110a. In other embodiments, the WUR receiver 110a may use a different design for demodulating received WUR frames.

In the illustrated example, network device 108a includes a WUR transmitter 109a. Optionally, WUR transmitter 109a may be an IEEE 802.11ba-based radio transmitter. In other examples, network device 108a may not include a WUR transmitter.

Network device 108a may be any non-AP STA. Network device 108a may include, for example, an Internet of Things (IoT) device. The IoT device may include an ambient power device. The ambient power device may be compliant with an IEEE 802.11bp standard. In some embodiments, network device 108a may include a backscattering tag.

Reference is now made to FIG. 1B, which is a schematic diagram of a data communication system 100b, in accordance with an example embodiment. System 100b includes a network infrastructure device 104 and multiple network devices 108. System 100b may include any suitable number of network devices 108. In the illustrated example embodiment, system 100b includes three network devices 108a-108c. In other embodiments, system 100b may include a different number of network devices 108.

As described herein above with reference to FIG. 1A, network infrastructure device 104 may be any suitable infrastructure device (e.g., an AP). Network infrastructure device 104 may include a WUR transmitter 105 configured to transmit WUR frames 112 and a WUR receiver 106 configured to receive WUR frames 112. In the illustrated example embodiments (FIGS. 1A and 1B), system 100 includes a single network infrastructure device 104. In other embodiments, system 100 may include multiple network infrastructure devices 104.

As described herein above with reference to FIG. 1A, network devices 108a, 108b, and 108c may include corresponding WUR receivers 110a, 110b, and 110c respectively. Optionally, WUR receivers 110a, 110b, and/or 110c may be based on a low-complexity, low-power envelope detector. Alternatively, WUR receivers 110a, 110b, and/or 110c may use a different design for demodulating received WUR frames. Network devices 108a, 108b, and 108c may include corresponding WUR transmitters 109a, 109b, and 109c respectively.

Network devices 108a, 108b and/or 108c may be any suitable non-AP STA devices including, for example, IoT devices. The IoT devices may include an ambient power device. The ambient power device may be compliant with an IEEE 802.11bp standard. Optionally, network device 108a, 108b, and/or 108c may include a backscattering tag.

In the examples illustrated in FIGS. 1A and 1B, network infrastructure device 104 transmits WUR frames 112 that are received by network devices 108. In other examples, one or more network devices 108 (e.g., 108a, 108b, and/or 108c) may transmit WUR frames 112 that are received by other devices.

The devices 104 and 108 of system 100 may include any suitable combination of processor and memory devices to implement the methods described herein.

In the IEEE 802.11ba standard, the WUR frames are control frames or management frames (e.g., Discovery frames, Beacon frames). The WUR frames may be used to initialize communication enabling initial low-power receiver operation for receiving the WUR frames. Subsequently, data frames based on a different 802.11 standard (requiring switching from low-power receiver operation to a higher-power radio receiver/PCR operation) are generally used for data transfer between devices.

In contrast, the disclosed systems and methods can mitigate receiver power consumption issues by providing WUR data frames. The disclosed WUR data frames can enable data communication between devices using low-power WUR receivers. Optionally, a receiver device (e.g., network device 108a) may not include a higher power/PCR receiver. Alternatively, a receiver device may include a higher power /PCR receiver but may receive WUR data frames without switching on the higher power/PCR receiver.

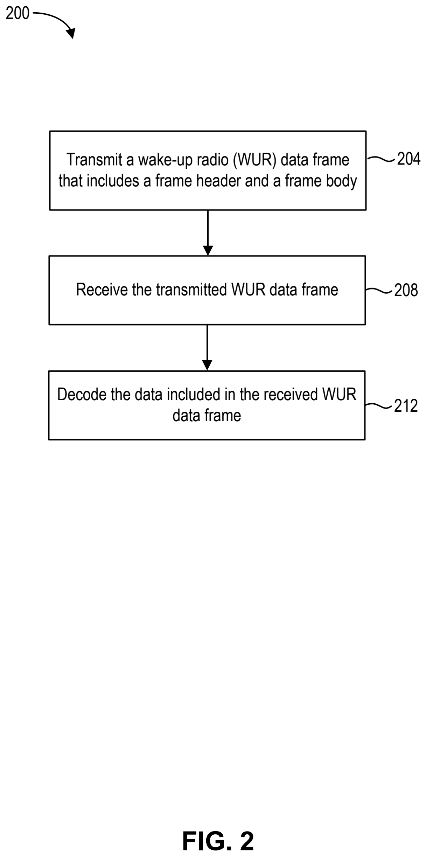

Reference is now made to FIG. 2, which is a process flow for an example embodiment of a method 200 of data communication using WUR frames. Method 200 may be implemented using any suitable data communication system. For example, method 200 may be implemented using system 100a (FIG. 1A) or system 100b (FIG. 1B) and concurrent reference is made to components illustrated in FIGS. 1A and 1B.

At act 204, method 200 includes transmitting a WUR data frame. For example, WUR transmitter 105 of network infrastructure device 104 may transmit WUR data frame 112.

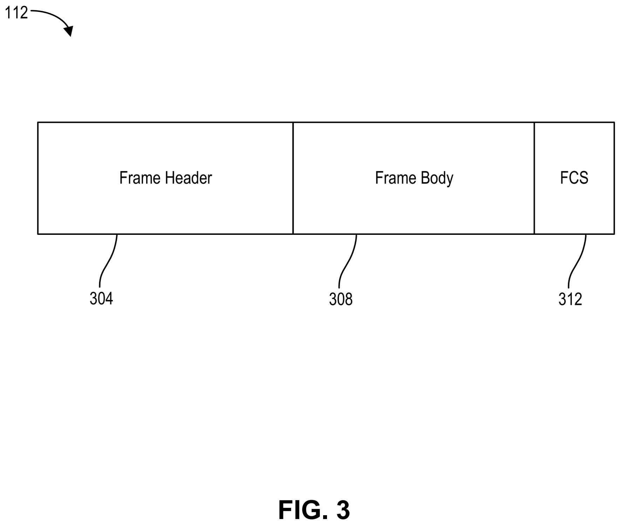

Reference is now made to FIG. 3, which is a block diagram of an example WUR data frame 112 that is transmitted at act 204. WUR data frame 112 may include a frame header 304 and a frame body 308a. In some embodiments, WUR data frame 112 may further include a frame check sequence (FCS) 312.

Frame header 304 may include a multicast address data field. The multicast address data field may include multicast address data indicating one or more network devices being addressed, for example, network devices 108a-108c. By using multicast addressing, method 200 can avoid overheads related to maintaining association between network infrastructure device 104 (e.g., an access point) and network devices 108 (e.g., non-AP stations).

In some embodiments, the multicast address data field may include an IEEE 802.11bc Enhanced Broadcast Services (EBCS) traffic stream identifier. The IEEE 802.11bc EBCS standard requires a device to transmit and receive a full Wi-Fi transmission including a complete header. However, WUR data frame 112 can improve data communication efficiency (e.g., a higher ratio of data payload length to the frame header length) compared with 802.11bc EBCS by using a shorter frame header 304. By leveraging IEEE 802.11bc Enhanced Broadcast Services (EBCS) capabilities, method 200 can avoid typical WUR operation overheads related to association and beacons.

In some embodiments, WUR data frame 112 may include a 32-bit frame header 304 (similar to the 32-bit MAC header length of IEEE 802.11ba WUR frames). In other embodiments, frame header 304 may have a different bit-length. For example, longer frame header 304 may enable longer multicast address data fields. As another example, shorter frame header 304 may improve the data communication efficiency.

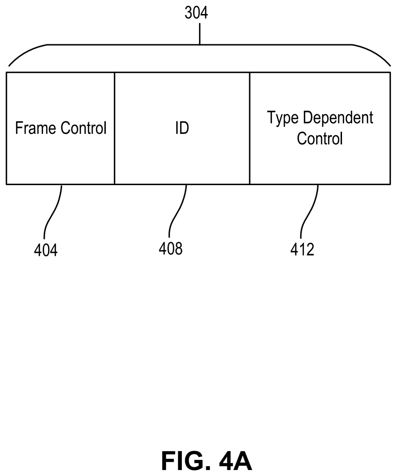

Reference is now made to FIG. 4A, which is a block diagram of a frame header 304, in accordance with an example embodiment. Frame header 304 may be configured to provide compatibility with frame header lengths of IEEE 802.11ba WUR frames. For example, frame header 304 may have a 32-bit length and include an 8-bit frame control field 404, a 12-bit ID field 408 and a 12-bit type dependent control field 412. In other embodiments, frame header 304 may have a different configuration.

A combination of ID field 408 and type dependent control field 412 may be configured to provide a 24-bit multicast address data field. The 24-bit multicast address data field can store a 24-bit EBCS stream identifier corresponding to the last 24 bits of an IEEE 802.11bc EBCS content MAC address.

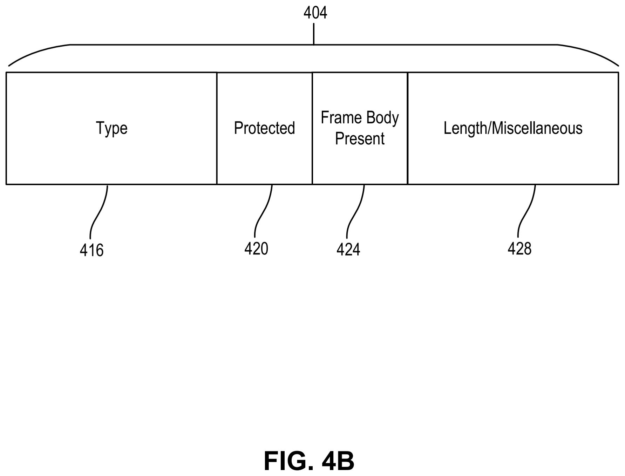

Reference is now made to FIG. 4B, which is a block diagram of the frame control field 404 of FIG. 4A. The 8-bit frame control field 404 may include a 3-bit type field 416, a 1-bit protected field 420, a 1-bit frame body present field 424 and a 3-bit Length/Miscellaneous field 428. In other embodiments, frame control field 404 may have a different configuration.

The 3-bit type field 416 may be used to store a 3-bit type identifier that is set to any one of the reserved values specified by the IEEE 802.11ba standard. The selected reserved value may be used to specify that the frame type of the WUR frame is "data" frame type. The 1-bit frame body present field 424 may store a value of "1" indicating that a frame body is present. The 3-bit Length/Miscellaneous field 428 may be used to store bits indicating data fragmentation.

In the IEEE 802.11-ba standard, the 3-bit Length/Miscellaneous field within the frame control field of the frame header is used to define a length of the frame body (if present). However, the maximum length of the frame body that can be defined using this field is limited to 18 bytes. While this maximum length of the frame body may be sufficient for the control or management frames provided by the 802.11-ba standard, this maximum length may not be sufficient for many data transfer applications. The disclosed systems and methods mitigate this technical problem by providing a separate data payload length field (as described herein below with reference to FIGS. 5A and 5B).

Reference is now made to FIG. 5A, which is a block diagram of the frame body 308a of FIG. 3. In some embodiments, frame body 308a may have variable bit - lengths. In other embodiments, frame body 308a may have a fixed bit-length

Frame body 308a may include a data payload length field 504 and a data payload field 508. Data payload length field 504 may be configured to store a payload length value indicating the bit-length of the data payload field 508. In some embodiments, frame body 308a may not include a data payload length field 504. For example, the WUR data frame may have a fixed length of the data payload field and the fixed length may not be defined within the frame body.

Data payload length field 504 may have any suitable bit-length. In some embodiments, data payload length field 504 may be an 8-fit field. In other embodiments, data payload length field 504 may have a different bit length (e.g., smaller than 8 or greater than 8). Smaller bit-lengths of data payload length field 504 may improve data communication efficiency. Longer bit-lengths of data payload length field 504 may enable specifying a greater range of variable bit-lengths of data payload field 508.

In some embodiments, frame body 308a may include one or more header fields. The header fields may be used to provide additional information, for example, related to type of data payload, source/destination addresses etc.

Referring back to FIG. 2, at act 208, method 200 includes receiving the WUR data frame that was transmitted at act 204. For example, a network device 108 may receive WUR data frame 112. The network device 108 can utilize the multicast address data included in WUR data frame 112 to determine if the WUR data frame 112 is addressed to that device.

In some embodiments, multiple network devices 108 may be simultaneously addressed using the multicast address data. This can enable data transfer to multiple devices and/or triggering of multiple network devices 108 using a single WUR frame.

At act 212, method 200 includes decoding the data payload included in the WUR data frame that was received at act 208. For example, one or more network devices 108 may determine that the received WUR data frame 112 is addressed to that network device. In response, network devices 108 may decode the data payload included in WUR data frame 112.

In some embodiments, method 200 may further include transmitting a WUR data frame by network device 108. For example, network device 108 may transmit the WUR data frame in response to instructions/data decoded at act 212. As another example, network device 108 may transmit the WUR data frame based on generating or receiving data for transmission to another device.

Reference is now made to FIG. 5B, which is a block diagram of an example embodiment of frame body 308b that may be transmitted by network device 108.

In some embodiments, frame body 308b may have variable bit -lengths. In other embodiments, frame body 308b may have a fixed bit-length.

Frame body 308b may include data payload length field 504, data payload field 508, and an ADDR/SN/FN field 512. In some embodiments, frame body 308b may not include data payload length field 504.

Data payload length field 504 may be configured to store a payload length value indicating the bit-length of the data payload field 508. Different bit-lengths may be selected for data payload field 508 based on the requirements of the data payload that is communicated. For example, network device 108 may be coupled to a sensor that generates 16-bit sensor data. In this application, the bit-length of the data payload field 508 may be configured to be 16 bits. In other applications, the bit-length of the data payload field 508 may be different (for example, smaller than 16 bits or greater than 16 bits).

In some embodiments, ADDR/SN/FN field 512 may be used to supplement the 24-bit multicast address data field provided by frame header 304. The additional bit storage provided by ADDR/SN/FN field 512 can enable specifying the full address of the network device 108 that transmits the WUR data frame. This can enable a receiver device decoding the WUR data frame to identify the network device 108 that transmitted the WUR frame.

In some embodiments, ADDR/SN/FN field 512 may be used to provide additional bit storage for specifying a sequence counter and/or a frag number associated with the data payload.

While the above description provides examples of the embodiments, it will be appreciated that some features and/or functions of the described embodiments are susceptible to modification without departing from the spirit and principles of operation of the described embodiments. Accordingly, what has been described above has been intended to be illustrative of the invention and non-limiting and it will be understood by persons skilled in the art that other variants and modifications may be made without departing from the scope of the invention as defined in the claims appended hereto. The scope of the claims should not be limited by the preferred embodiments and examples, but should be given the broadest interpretation consistent with the description as a whole.

### CLAUSES

Clause 1: A method of data communication comprising: transmitting a wake-up radio (WUR) data frame by an IEEE 802.11ba-based radio transmitter.

Clause 2: The method of any other clause, wherein the WUR data frame includes a frame header and a frame body, the frame body including: a data payload field for storing data to be communicated; and a data payload length field that indicates a bit-length of the data payload field.

Clause 3: The method of any other clause, wherein the frame header includes an 8-bit frame control field, the 8-bit frame control field including a 3-bit type field storing a type identifier value that indicates a WUR frame type of the WUR data frame as a "data" frame type.

Clause 4: The method of any other clause, wherein the WUR data frame is compliant with an IEEE 802.11ba standard.

Clause 5: The method of any other clause, wherein the frame header is a 32-bit MAC header that includes the 8-bit frame control field and a 24-bit multicast address data field, the 24-bit multicast address data field formed by a combination of a 12-bit ID field and a 12-bit Type Dependent Control field.

Clause 6: The method of any other clause, wherein the multicast address data field includes an IEEE 802.11bc Enhanced Broadcast Services (EBCS) traffic stream identifier.

Clause 7: The method of any other clause, wherein the 8-bit frame control field further includes a 3-bit Length/Miscellaneous field to store bits indicating data fragmentation.

Clause 8: The method of any other clause, further comprising receiving and decoding the data frame by one or more devices, each of the one or more devices including an IEEE 802.11ba-based radio receiver.

Clause 9: The method of any other clause, wherein the one or more devices includes an ambient power device compliant with an IEEE 802.11bp standard.

Clause 10: The method of any other clause, wherein the one or more devices includes a backscattering tag.

Clause 11: The method of any other clause, wherein the WUR data frame is transmitted by the IEEE 802.11ba-based radio transmitter of a non-Access Point (AP) station (STA).

Clause 12: A system of data communication comprising: a first device including an IEEE 802.11ba-based radio transmitter for transmitting a wake-up radio (WUR) data frame, and a second device comprising a WUR receiver for receiving the WUR data frame.

Clause 13: The system of any other clause, wherein the WUR data frame includes a frame header and a frame body, the frame body including: a data payload field for storing data to be communicated; and a data payload length field that indicates a bit-length of the data payload field.

Clause 14: The system of any other clause, wherein the frame header includes an 8-bit frame control field, the 8-bit frame control field including a 3-bit type field storing a type identifier value that indicates a WUR frame type of the WUR data frame as a "data" frame type.

Clause 15: The system of any other clause, wherein the WUR data frame is compliant with an IEEE 802.11ba standard.

Clause 16: The system of any other clause, wherein the frame header is a 32-bit MAC header that includes the 8-bit frame control field and a 24-bit multicast address data field, the 24-bit multicast address data field formed by a combination of a 12-bit ID field and a 12-bit Type Dependent Control field.

Clause 17: The system of any other clause, wherein the multicast address data field includes an IEEE 802.11bc Enhanced Broadcast Services (EBCS) traffic stream identifier.

Clause 18: The system of any other clause, wherein the 8-bit frame control field further includes a 3-bit Length/Miscellaneous field to store bits indicating data fragmentation.

Clause 19: The system of any other clause, wherein the WUR receiver is an IEEE 802.11ba-based radio receiver.

Clause 20: The system of any other clause, wherein the second device is an ambient power device compliant with an IEEE 802.11bp standard.

Clause 21: The system of any other clause, wherein the second device is a backscattering tag.

Clause 22: The system of any other clause, wherein the first device is a non-Access Point (AP) station (STA).

## Claims

1. A method of data communication comprising:
transmitting a wake-up radio (WUR) data frame by an IEEE 802.11ba-based radio transmitter, the WUR data frame including:
a frame header; and
a frame body including:
a data payload field for storing data to be communicated; and
a data payload length field that indicates a bit-length of the data payload field.

2. The method of claim 1, wherein the frame header includes an 8-bit frame control field, the 8-bit frame control field including a 3-bit type field storing a type identifier value that indicates a WUR frame type of the WUR data frame as a "data" frame type.

3. The method of claim 1 or claim 2, wherein the WUR data frame is compliant with an IEEE 802.11ba standard.

4. The method of claim 2, wherein the frame header is a 32-bit MAC header that includes the 8-bit frame control field and a 24-bit multicast address data field, the 24-bit multicast address data field formed by a combination of a 12-bit ID field and a 12-bit Type Dependent Control field.

5. The method of claim 4, wherein the multicast address data field includes an IEEE 802.11bc Enhanced Broadcast Services (EBCS) traffic stream identifier.

6. The method of claim 2, wherein the 8-bit frame control field further includes a 3-bit Length/Miscellaneous field to store bits indicating data fragmentation.

7. The method of any one of claims 1 to 6, further comprising receiving and decoding the data frame by one or more devices, each of the one or more devices including an IEEE 802.11ba-based radio receiver.

8. The method of claim 7, wherein the one or more devices includes an ambient power device compliant with an IEEE 802.11bp standard.

9. The method of claim 7 or claim 8, wherein the one or more devices includes a backscattering tag.

10. The method of any one of claims 1 to 9, wherein the WUR data frame is transmitted by the IEEE 802.11ba-based radio transmitter of a non-Access Point (AP) station (STA).

11. A system of data communication comprising: a first device including an IEEE 802.11ba-based radio transmitter, and a second device comprising a WUR receiver for receiving the WUR data frame, wherein the system is configured to perform the method according to any one of claims 1 to 6.

12. The system of claim 11, wherein the WUR receiver is an IEEE 802.11ba-based radio receiver.

13. The system of claim 11 or claim 12, wherein the second device is an ambient power device compliant with an IEEE 802.11bp standard.

14. The system of any one of claims 11 to 13, wherein the second device is a backscattering tag.

15. The system of any one of claims 11 to 14, wherein the first device is a non-Access Point (AP) station (STA).
